(19) Europäisches Patentamt
European Patent Office
Office européen des brevets

(11) **EP 3 557 754 A1**

(12) **EUROPEAN PATENT APPLICATION**

(43) Date of publication:
**23.10.2019   Bulletin 2019/43**

(51) Int Cl.:
*H02P 1/04* (2006.01)          *H02P 6/08* (2016.01)
*H02P 6/10* (2006.01)          *H02P 6/16* (2016.01)
*H02P 6/17* (2016.01)          *H02P 6/20* (2016.01)
*H02P 6/21* (2016.01)

(21) Application number: **19168480.2**

(22) Date of filing: **10.04.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **17.04.2018   CN 201810341197**

(71) Applicant: **Johnson Electric International AG
3280 Murten (CH)**

(72) Inventors:
• **Shi, Jingxin
  Shatin, N.T. (HK)**
• **Li, Yonggang
  Shatin, N.T. (HK)**

(74) Representative: **Hocking, Adrian Niall et al
Albright IP Limited
County House
Bayshill Road
Cheltenham, Glos. GL50 3BA (GB)**

(54)    **MOTOR DRIVING CIRCUIT, MOTOR DRIVING METHOD AND MOTOR DEVICE USING THE SAME**

(57)     A motor driving circuit (30) for driving a brushless motor (60) with a sine wave driving mode in a continuous running phase is provided. The motor driving circuit (30) includes a rotor position identifying module (36) configured to identify a sector k in which a rotor (61) of the brushless motor (60) is currently located and an initial electrical angle $\theta_k$ of the sector k, a speed calculation module (34) configured to obtain an expected $\omega_k$ of the rotor (61) in the sector k by calculating the average speed of one or more sectors previous to the sector k; and a calculation/control module (38) configured to determine a real-time electrical angle $\theta$, determining a real-time equivalent voltage, an obtain a corresponding pulse modulation driving signal.

Figure 1

**Description**

**FIELD OF THE INVENTION**

This disclosure relates to a motor driving technology, in particular to motor driving circuit and method configured to drive a brushless DC motor with a sine wave current.

**BACKGROUND OF THE INVENTION**

Brushless DC motors are characterized by small size and simple control due to no mechanical brushes and commutators as compared with brush motor. More and more brushless DC motors are used in various equipment such as household appliances, medical equipment, vehicles, and power tools. Conventional brushless DC motors are driven with square wave current, which bring high torque ripple during in operation of motor and cause big louder, especially when the motor works under heavy load conditions.

**SUMMARY OF THE INVENTION**

Accordingly, there is a need for a low noise motor driving circuit and motor driving method, and a motor device using the same

According to one aspect, a motor driving circuit for driving a brushless motor with a sine wave driving mode in a continuous running phase is provided. The brushless motor includes a stator with a plurality of windings, a rotor and a plurality of position sensors configured to output different magnetic pole detection signals according to positions of the roto. The positions of the rotor relative to the stator in the circumferential direction being divided into a plurality of sectors. The motor driving circuit includes a rotor position identifying module configured to identify a sector k in which the rotor is currently located in and an initial electrical angle $\theta_k$ corresponding uniquely to the sector k; a speed calculation module configured to obtain an expected cok of the rotor in the sector k by calculating the average speed of one or more sectors previous to the sector k; and a calculation/control module configured to: 1) determine a real-time electrical angle $\theta$ of the rotor in the current sector based on the expected $\omega k$. and the initial electrical angle $\theta_k$; 2) determine a real-time equivalent voltage should be output to the windings according to a predetermined modulation strategy for sinusoidal modulated output voltage and the real-time electrical angle $\theta$; and 3) obtain a corresponding pulse modulation driving signal according to the determined the real-time equivalent voltage.

According to another aspect, a motor device is provided, which includes a brushless motor, an inverter, a plurality of position sensors, and above-described motor driving circuit.

According to still another aspect, a motor driving method is provided, which includes the following steps:

identifying the current sector, in which a rotor of the brushless motor is located in, and the initial electrical angle $\theta_k$ corresponding to the current sector, according to magnetic pole detection signals;

obtaining an expected $\omega_k$ of the rotor 61 in the current sector by calculating the average speed of one or more sectors previous to the current sector;

determining the real-time electrical angle $\theta$ of the rotor 61 in the current sector based on the expected $\omega_k$ and the initial electrical angle $\theta_k$;

determining a modulation strategy for sinusoidal modulated output voltage;

determining the real-time equivalent voltage according to the modulation strategy and obtaining a corresponding pulse modulation driving signal according to the determined the real-time equivalent voltage.

**BRIEF DESCRIPTION OF THE DRAWINGS**

Fig. 1 is a schematic block diagram of a motor device according to an embodiment of the present invention;

Fig. 2 is a diagram showing the relationship between the signal output from the Hall sensor and the rotor position in the embodiment of Fig. 1;

Fig.3 is a flow chart of a motor driving method according to an embodiment of the present invention.

**DETAILED DESCRIPTION OF THE PREFERRED EMBODIMENTS**

The present invention will now be described further, by way of example only, with reference to the accompanying drawings.

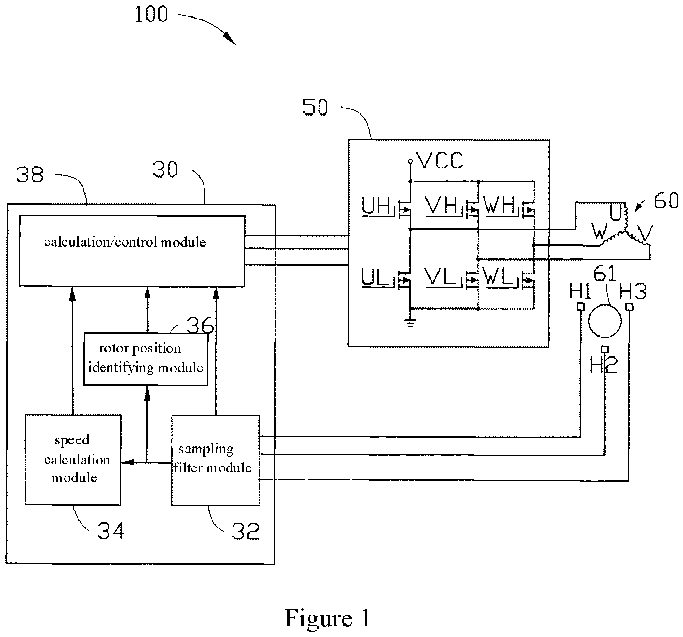

Please refer to FIG. 1, a motor device 100 in according to the present invention includes a brushless motor 60, an inverter 50, a plurality of position sensors, and a motor driving circuit 30. The motor driving circuit 30 is electrically connected to the inverter 50, and the inverter 50 is electrically connected to the brushless motor 60. The inverter 50 includes a plurality of semiconductor switch elements, and the motor driving circuit 30 outputs a driving signal to shift on/off states of the semiconductor switch elements of the inverter 50 to control an operation of the motor 60. In another embodiment of the present invention, a gate driver may be disposed between the inverter 50 and the motor driving circuit 30, and the gate driver is used to amplify the driving signal output by the motor driving circuit 30.

In present embodiment, the brushless motor 60 is a three-phase brushless direct current motor, and includes a stator and a rotor 61 rotatable relative to the stator. The stator traditionally includes a stator core and a plurality of windings wound around the stator core. The stator core can be made of soft magnetic materials such as pure iron, cast iron, cast steel, electrical steel, and silicon steel. The plurality of windings is grouped into three phases, respectively U-phase winding U, V-phase winding V and W-phase winding W. In the present embodiment, the three-phase windings are Y-connection. One of opposite ends of each of the U-phase winding, V-phase winding and W-phase are connected the inverter 50, and the other ends of each of the U-phase winding, the V-phase winding, and the W-phase winding in connected to the neutral point. The rotor 61 traditionally includes rotor core and a plurality of magnets mounted to the rotor core.

A position of the rotor 61 relative to the stator in the circumferential direction is divided into six sectors by each $\pi/3$ electrical angle, that is, a commutation action is taken when the rotor 61 rotates relative to the stator for each $\pi/3$ electrical angle. Corresponding to the three-phase windings of the motor 60, the inverter 50 consists of three bridge arms with the six semiconductor switching elements, and respectively connected to three terminals of the three-phase winding of the motor to achieve high-speed switching for the commutation action of the brushless motor 60. The two semiconductor switching elements for controlling the U-phase winding include the upper arm switching element UH and a lower arm switching element UL. The two semiconductor switching elements that control the V-phase winding include an upper arm switching element VH and a lower arm switching element VL. The two semiconductor switching elements for controlling the W-phase winding include the upper arm switching element WH and the lower arm switching element WL. The motor driving circuit 30 output different driving signals to set an on/off state of each semiconductor switching element. In operation, the two switching elements in the same bridge arm of the inverter 50 are interlocked, i.e. only one of the two semiconductor switching element is switched on at the same time. In one embodiment, the semiconductor switching elements are MOSFETs. The gates of all the semiconductor switching elements are connected to the motor driving circuit 30 as the control terminals of the semiconductor switching elements. The drains of all the upper arm switches are connected to the power source VCC to receive the power. The sources of all the upper arm switches are respectively connected to the drains of the lower arm switches of the bridge arms. The source of all the lower arm switches is connected to the negative of the power source or ground. In other embodiment, the semiconductor switching elements may be insulated gate bipolar transistors (IGBT) or bipolar transistors (BJT).

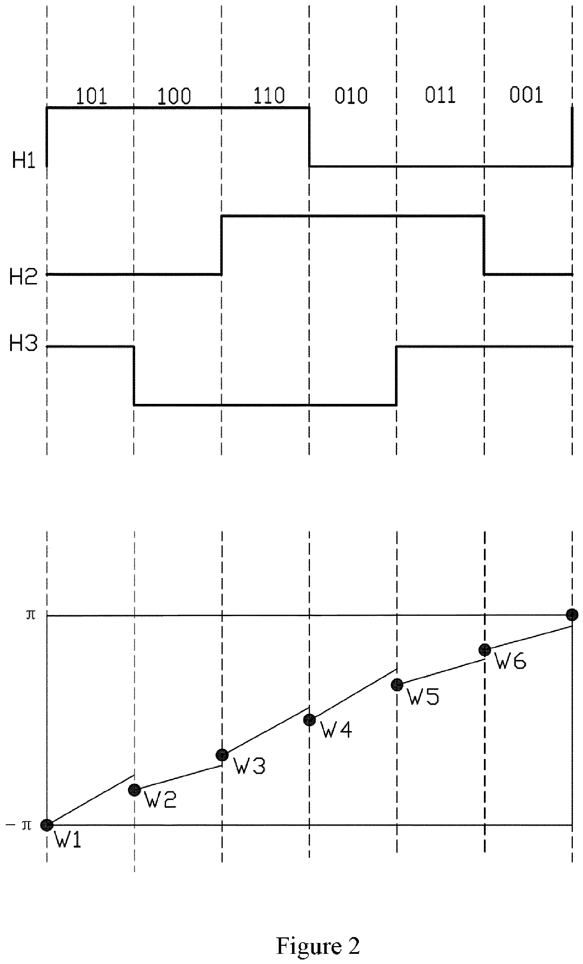

In one embodiment, the plurality of position sensors includes three position sensors, such as Hall sensors H1, H2, and H3, to obtain position information of the rotor 61. The Hall sensors H1, H2, and H3 are evenly distributed in the circumferential direction and sequentially spaced by $\pi2/3$ electrical angle. Since the position of rotor 61 relative to the stator in the circumferential direction is divided into six sectors by each $\pi/3$ electrical angle. Refer to fig.2, the position sensors H1, H2, and H3 altogether output six kinds of magnetic pole detection signals 101, 100, 110, 010, 011, 001 for a complete electrical cycle, the six kinds of magnetic pole detection signals are collected by the motor driving circuit 30 for creating driving signals.

The motor driving circuit 30 includes a sampling/filtering module 32, a speed calculation module 34, a rotor position identifying module 36, and a calculation/control module 38. The sampling/filtering module 32 collects the magnetic pole detection signals from the position sensors H1, H2, and H3. The sampling/filtering module 32 is coupled to the speed calculation module 34, the rotor position identifying module 36, and the calculation/control module 38. The speed calculation module 34 and the rotor position identifying module 36 are also coupled to the calculation/control module 38. The calculation/control module 38 is coupled to the inverter 50.

The magnetic pole detection signals output from the position sensors H1, H2, and H3 are sampled and filtered by the sampling/filtering module 32 to obtain a reliable commutation signals. In other embodiments, the sampling/filtering module 32 is omitted, and the magnetic pole detection signals output from the position sensors H1, H2, and H3 are directly collected by the speed calculation module 34 and the calculation/control module 38. In one embodiment, the motor works in two phases, i.e. a starting phase and a continuous running phase. The motor is driven with different driving strategy in the starting phase and the continuous running phase. In the starting phase, the sampling/filtering module 32 collects the magnetic pole detection signals output by the three Hall sensors H1, H2, and H3, and sends the magnetic pole detection signals to the rotor position identifying module 36 to identify a sector in which the rotor is located in, based on the magnetic pole detection signals. The calculation/control module 38 set an on/off state of each semiconductor switching element of the corresponding semiconductor switching elements in the inverter 50 to state the motor and drive the rotor to rotate in a predetermined direction. Referring to the table below for a relationship between the on/off states of the semiconductor switching elements in the inverter 50 as regarded to magnetic pole detection signals.

| Sectors | I | II | III | IV | V | VI |
|---|---|---|---|---|---|---|
| Magnetic pole detection signals | 101 | 100 | 110 | 010 | 011 | 001 |
| Semiconductor switching elements | UL, VH | UL, WH | VL, WH | UH, VL | UH, WL | VH, WL |
| Phase voltage loaded on the motor | $U_{VU}$ | $U_{WU}$ | $U_{WV}$ | $-U_{VU}$ | $-U_{WU}$ | $-U_{WV}$ |

In the starting phase, Uvu, Uwu, and Uwv are all constant values, which is equal to the input voltage of the external power supply.

The operation of the motor driving circuit 30 will now be described in details as below.

In the starting phase, the sampling/filtering module 32 collects the magnetic pole detecting signals output by the three Hall sensors H1, H2, and H3. The rotor position identifying module 36 identifies the position of the rotor according to the magnetic pole detecting signal, i.e. in which sector the rotor is located in. The calculation/control module 38 sends a control signal according to the specified sector of the rotor determined by the rotor position identifying module 36, to control the inverter 50, thereby driving the motor with square wave current. In the starting phase, the brushless motor 60 will run at least six complete electrical cycles or the rotor is rotated at least one complete revolution. In the starting phase, a voltage in the form of a square wave is loaded onto the winding of the motor to cause the motor to driven in a six-step manner. When the rotor is in a specific sector, the semiconductor switching elements of inventor 50 are set to their on/off states correspondingly, therefore, the windings of the stators will be energized to produce a magnetic field, which interacts with the magnets of the rotor 61 to drive the rotor to start and rotate continuously.

In the starting phase, a square wave driving mode can provide a large starting torque. When the motor is operated in the continuous phase, in order to make the motor run stably, and effectively reduce the torque ripple and noise generated during the operation of the motor, the rotor 61 should be applied as far as possible a constant effective torque in the rotation of rotor 61. The vector superposition of the torque of the three-phase windings U, V, W applied to the rotor 61 is the effective torque applied to the rotor. When the equivalent current through the three-phase windings U, V, W changes sinusoidally with the electrical angle of the rotor 61, and is spaced $2\pi/3$ from each other, the effective torque of the motor rotor can be kept constant. Since the current through the windings is related to the output voltage of the inverter 50, that is, the phase voltage applied to the winding, it can be understood that the phase voltage Uvu, Uwu, and Uwv should be functions of the sinusoidal value of the electrical angle of the rotor 61 to make sure the equivalent current through the windings to be sinusoidal with the electrical angle of the rotor. That is, Uvu=$f$[sin$\theta$], Uwu=$f$[sin$(\theta-2\pi/3]$, Uwv=$f$[sin$(\theta-4\pi/3]$, where $\theta$ is the electrical angle of the rotor 61. Since the input voltage is a DC voltage, phase voltages Uvu, Uwu, and Uwv satisfying the above functional relationship need to be obtained by different modulation strategy. In one embodiment, the sinusoidal pulse width modulation (SPWM) or space vector pulse width modulation (SVPWM) can be employed. Different modulation methods have different functional relationships. The sinusoidal pulse width modulation (SPWM) is taken as an example in the following description.

The basic idea of SPWM is to ensure that the output voltage value of the inverter is in a constant proportional to a sine function of the rotor electrical angle. Uvu= $U_0\sin\theta$; Uwu= $U_0\sin(\theta-2\pi/3)$; Uwv= $U_0\sin(\theta-4\pi/3)$. $U_0$ is a constant, which is determined by the magnitude of the DC power source VCC.

In the stating phase, the motor is driven by square wave current, only the position of the commutation point should be obtained for commutation, and continuous rotor position information is unnecessary. However, for driving the motor with the sine wave current, continuous rotor position information of the rotor 61 are necessary. The 3 Hall sensors H1, H2, H3 can only provide that in which sector the rotor is. In other words, only the exact electrical angle of the rotor 61 at the beginning of each sector can be obtained. The position information of the rotor 61, i.e. the real-time electrical angle of the rotor, except at the beginning of each sector, cannot be obtained from the Hall sensors H1, H2, and H3. So that, it is necessary to estimate the position of the rotor 61 at any time instant to enable the motor to be driven with sine wave current in the continuous running phase. In one embodiment, it is assumed that the rotor 61 operates at a constant predicted speed within each sector. Thus, the electrical angle of the rotor within the sector is linear with a period of time of the rotor 61 within that sector. As long as the electrical angle of rotor 61 at the beginning of the sector and the expected rotational speed of the rotor 61 within the sector are obtained, the electrical angle of the rotor 61 at any time instant when the rotor 61 runs within the section can be obtained. It can be understood that the rotational speed of the rotor 61 at the beginning of one of the sectors can be regard as the constant rotational speed of the rotor 61 within the whole sector, since the rotor 61 is assumed to operate at a constant predicted speed within each sector. Further, the beginning of current sector is exactly the end of the previous one sector, and the ending speed of the previous one sector can be substantially equal to the actual average speed of the previous one sector, therefore, the actual average speed of the previous one sector can be regard as the expected speed of the current sector.

The rotational speed of the rotor 61 within current sector k can be estimated by the following formula:

$$\omega_k = \frac{\pi/3}{\Delta t_{k-1}},$$ where $\Delta t_{k-1}$ is the whole period of time in the sector k-1, which is the previous one sector corresponding to the sector k.

The electrical angle of the rotor 61 at any time instant t in the sector k can be determined by the following formula: $\theta = \theta_k + \omega_k*(t-t_k)$, where t is any time instant, $t_k$ is the time instant of the rotor enters the sector k (k = 1, 2, ... 6), and $\theta_k$ is the initial electrical angle of the sector k.

Therefore, to apply sinusoidal pulse width modulation (SPWM), the output voltage of the inverter onto the windings at any time instant t is determined by the following formula: $Uvu=U_0\sin(\theta_k+\omega_k*(t-t_k))$; $Uwu= U_0\sin(\theta_k+\omega_k*(t-t_k)-2\pi/3)$; $Uwv= U_0\sin(\theta_k+\omega_k*(t-t_k)-4\pi/3)$.

Specifically, the rotor position identifying module 36 identifies the sector k in which the rotor is located and the initial electrical angle $\theta_k$ corresponding uniquely to the current sector k, according to the magnetic pole detection signals detected by the Hall sensors H1, H2, and H3 , and collected by the sampling/filtering module 32. The speed calculation module 34 calculates the average speed of the rotor 61 of the previous one sector based on the time interval of the last two the magnetic pole detection signals, and outputs the calculation result to the calculation/control module 38 as the constant rotation speed of the rotor 61 in the current sector k. The calculation/control module 38 estimates the real-time electrical angle of the rotor 61 in the current sector k according to the obtained initial electrical angle $\theta_k$ of the rotor 61 and the average speed of the rotor 61 in the previous sector k-1. The real-time electrical angle of the rotor 61 is used as a preset sinusoidal modulated output voltage conversion formula. The position variable obtains the real-time equivalent voltage that should be output, and obtains a corresponding pulse modulation driving signal according to the calculation result, and is used for driving the inverter 50 to generate a corresponding equivalent voltage to control the operation of the motor 60. The real-time electrical angle is taken as a position variable of the preset sinusoidal modulated output voltage conversion formula to calculate a real-time equivalent voltage that should be output, and obtaining a corresponding pulse-modulated driving signal according to the calculation result, for driving the inverter 50 to generate the corresponding equivalent voltage to drive the motor 60.

It can be understood that when sinusoidal pulse width modulation (SPWM) is applied, the sinusoidal modulation output voltage will be obtained by below conversion formula: $Uvu=U_0\sin(\theta_k+\omega_k*(t-t_k))$; $Uwu= U_0\sin(\theta_k+\omega_k*(t-t_k)-2\pi/3)$; $Uwv= U_0\sin(\theta_k+\omega_k*(t-t_k)-4\pi/3)$, where Uvu, Uwu, and Uwv are equivalent phase voltage which will be obtained from the power source VCC pulse-modulated with a certain duty ratio.

Refer to fig. 2 for a diagrammatic relationship between the magnetic pole detection signal output by the Hall sensors H1, H2, and H3 and the rotor position when the motor works in the continuous running phase. With the rotation of the rotor, the sector in which the rotor is currently located is identified based on the magnetic pole detection signals of the rotor sensed by the Hall sensors H1, H2, H3, and the initial electrical angle of the sector is further obtained. The initial positions of the rotors for all of the sectors are the actual positions the rotor 61, shown as points W1-W6. The other positions of the rotor in each sector except the initial positions of the sectors are estimated based on the average speed of the previous one sector. Although the estimated position of the rotor is slightly deviated from the actual position, the rotor positions will be re-estimated according to the initial position of rotor 61 when the rotor 61 shifts its sector. Therefore, the deviation of the position estimation will not be accumulated in different sectors, making the position estimation of the rotor more accurate. In present embodiment, since the driven voltage loaded on the brushless motor 60 is close to sine wave voltage in the continuous running phase of the brushless motor 60, the brushless motor 60 has a small torque ripple, and can be applied to various devices, such as an automobile.

In other embodiment, the positions of the rotor in the current sector can be estimated based on the average speed of the previous two or more sectors, which is regarded as the constant expected speed in the current sector, i.e. the average speed can be: $\omega_k = \frac{2\pi/3}{\Delta t_{k-1} + \Delta t_{k-2}}$ or $\omega_k = \frac{\pi}{\Delta t_{k-1} + \Delta t_{k-2} + \Delta t_{k-3}}$, etc., where $\Delta t_{k-2}$ and $\Delta t_{k-3}$ are respectively the period of time of the rotor in two and three sectors previous to the current sector.

The relationship between the six kinds of magnetic pole detection signals, the corresponding sectors, and the on/off states of the semiconductor switch elements are only exemplified and are not limited, since different motor position sensors are installed in different manners, the magnetic pole detection signals, the sectors, and the on/off states of the semiconductor switching elements can have other different correspondences. It is also understood that the motor driving circuit 30 can be implemented with standard logic devices, or can be implemented with an ASIC, a thick film circuit, an MCU, an FPGA, a programmable logic device, or an MCU. The position sensors can also be other types of sensors such as an optoelectronic sensor.

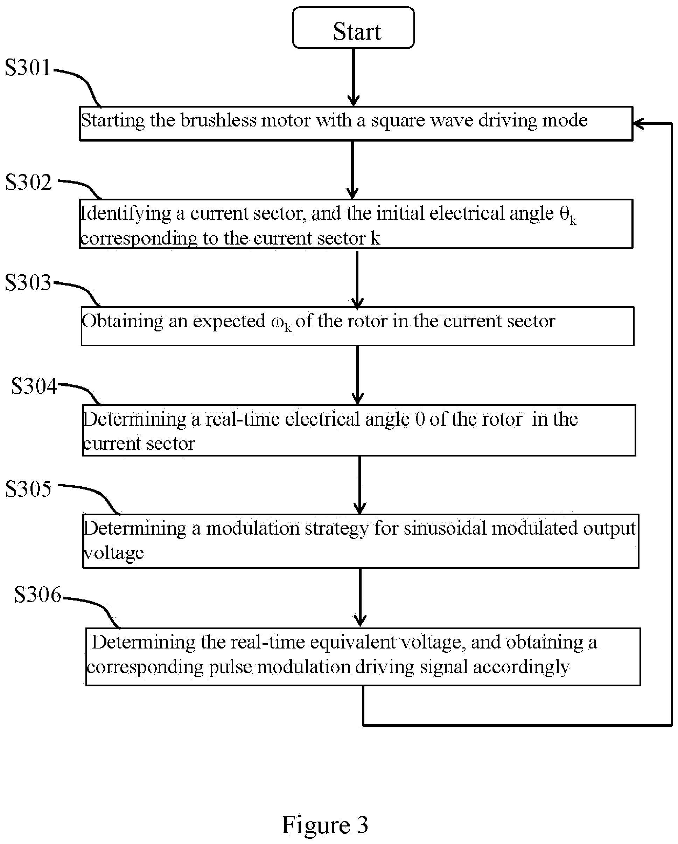

Refer to FIG. 3, a motor driving method in according to the present invention includes the following steps:

S301: Starting the brushless motor 60 with a square wave driving mode according to the position of the rotor 61 sensed by the position sensors. The brushless motor 60 will run at least six complete electrical cycles or the rotor 61 is rotated at least one complete revolution under the square wave driving mode, and then continue to run with a sine wave driving mode.

S302: Identifying a current sector k, in which the rotor 61 is located in, and the initial electrical angle $\theta_k$ corresponding to the current sector k, according to the magnetic pole detection signals. Each sector k has a unique initial electrical angle $\theta_k$.

S303: Obtaining an expected $\omega_k$ of the rotor 61 in the current sector by calculating the average speed of one or more sectors previous to the current sector. The average speed of one or more previous to the current sectors is regarded as the expected $\omega_k$ of the current sector. The average speed of the previous one sector can be calculated

by $\omega_k = \dfrac{\pi/3}{\Delta t_{k-1}}$ , where $\Delta t_{k-1}$ is the whole period time in the sector k-1. The average speed can also be:

$\omega_k = \dfrac{2\pi/3}{\Delta t_{k-1} + \Delta t_{k-2}}$ or $\omega_k = \dfrac{\pi}{\Delta t_{k-1} + \Delta t_{k-2} + \Delta t_{k-3}}$ , etc., where $\Delta t_{k-2}$ and $\Delta t_{k-3}$ are respectively the period of time of the rotor 61 in two and three sectors previous to the current sector.

S304: Determining a real-time electrical angle $\theta$ of the rotor 61 in the current sector based on the expected $\omega_k$ and the initial electrical angle $\theta_k$. The real-time electrical angle $\theta$ of the rotor 61 in the current sector k can be determined by the following formula: $\theta = \theta_k + \omega_k*(t-t_k)$, where t is any time instant, $t_k$ is the time instant of the rotor 61 enters the sector k (k = 1, 2, ... 6), and $\theta_k$ is the initial electrical angle of the sector k.

S305: Determining a modulation strategy for sinusoidal modulated output voltage. In one embodiment, sinusoidal pulse width modulation (SPWM) is employed, and the output voltage of the inverter onto the windings of the motor 60 at any time instant t is determined by Uvu= $U_0$sin($\theta$k+$\omega$k*(t-tk)); Uwu= $U_0$sin($\theta$k+$\omega$k*(t-tk)-2$\pi$/3; Uwv= $U_0$sin($\theta$k+$\omega$k*(t-tk)-4$\pi$/3), where Uvu, Uwu, and Uwv are equivalent phase voltage output to the windings, which will be obtained from the power source VCC pulse-modulated with a certain duty ratio. Uo is a constant, which is determined by the magnitude of the DC power source VCC.

S306: Determining the real-time equivalent voltage that the inverter 50 should output according to the modulation strategy determined in step S305, the real-time electrical angle $\theta$ determined in step S304, which is used as a position variable of the modulation strategy, and obtaining a corresponding pulse modulation driving signal according to the determined the real-time equivalent voltage. The inverter 50 output the corresponding equivalent voltage to driving control the motor 60 to rotate, until the rotor 61 enter a next sector and the process returns to the step S302.

When a brushless motor 60 having the motor driving circuit and controlled with the motor driving method are used in an vehicle window lift control device, the brushless motor 60 is driven with a square wave driving mode in the starting phase to overcome the starting friction between a rotating shaft and bushings of the motor and the inertia of the load such as the window. Then, the brushless motor 60 is shifted to a sine wave driving mode in the continuous running phase to effectively reduce the noise during the window lifting and lowering process. According to the noise test result, the brushless motor 60 can reduce the noise by at least 2 dB compared with the traditional brushless controlled only with the square wave driving mode.

Although the invention is described with reference to one or more embodiments, the above description of the embodiments is used only to enable people skilled in the art to practice or use the invention. It should be appreciated by those skilled in the art that various modifications are possible without departing from the spirit or scope of the present invention. The embodiments illustrated herein should not be interpreted as limits to the present invention, and the scope of the invention is to be determined by reference to the claims that follow.

**Claims**

1. A motor driving circuit (30) for driving a brushless motor (60) with a sine wave driving mode in a continuous running phase, the brushless motor (60) comprising a stator with a plurality of windings, a rotor (61) and a plurality of position sensors (HI, H2, H3) configured to output different magnetic pole detection signals according to positions of the rotor (61), the positions of the rotor (61) relative to the stator in the circumferential direction being divided into a plurality of sectors, the motor driving circuit (30) comprising:

   a rotor position identifying module (36) configured to identify a sector k in which the rotor (61) is currently located in and an initial electrical angle $\theta_k$ corresponding uniquely to the sector k;
   a speed calculation module (34) configured to obtain an expected $\omega_k$ of the rotor (61) in the sector k by calculating the average speed of one or more sectors previous to the sector k;and
   a calculation/control module (38) configured to: 1) determine a real-time electrical angle $\theta$ of the rotor (61) in the current sector based on the expected $\omega_k$ and the initial electrical angle $\theta_k$; 2) determine a real-time equivalent voltage should be output to the windings according to a predetermined modulation strategy for sinusoidal modulated output voltage and the real-time electrical angle $\theta$; and 3) obtain a corresponding pulse modulation driving signal according to the determined the real-time equivalent voltage.

2. The motor driving circuit (30) of claim 1, wherein the real-time electrical angle $\theta$ of the rotor (61) in the sector k can be determined by the following formula: $\theta=\theta_k+\omega_k*(t-t_k)$, where t is any time instant when the rotor (61) in the sector k, $t_k$ is the time instant of the rotor (61) enters the sector k (k = 1, 2, ... 6), and $\theta_k$ is the initial electrical angle of the sector k.

3. The motor driving circuit (30) of claim 1, further comprises a sampling/filtering module (32) coupled to the speed calculation module (34), the rotor position identifying module (36) and the calculation/control module (38), and configured to sample filter magnetic pole detection signals.

4. A motor device comprising a brushless motor (60), an inverter (50), a plurality of position sensors (HI, H2, H3), and a motor driving circuit (30) of claim 1 or 2, wherein the inverter (50) is connected between the brushless motor (60) and the motor driving circuit (30), and the pulse modulation driving signal obtained by the calculation/control module (38) of the motor driving circuit (30) is used to drive the inverter (50) to output a corresponding equivalent voltage loaded onto the brushless motor (60).

5. The motor device of claim 4, wherein the brushless motor (60) is a three-phase brushless DC motor.

6. The motor device of claim 5, wherein the plurality of position sensors comprises three position sensors (HI, H2, H3), the motor driving circuit (30) further comprises a sampling/filtering module (32) coupled to the speed calculation module (34), the rotor position identifying module (36) and the calculation/control module (38), and configured to sample filter magnetic pole detection signals outputted by the position sensors (HI, H2, H3), the brushless motor (60) works sequentially in a starting phase with a square wave driving mode and the continuous running phase driven by the motor driving circuit (30) with a sine driving mode.

7. The motor device of claim 6, wherein the brushless motor (60) runs at least six complete electrical cycles or the rotor (61) is rotated at least one complete revolution in the starting phase with the square wave driving mode.

8. A motor driving method for driving a brushless motor (60), comprising:

   identifying the current sector, in which a rotor (61) of the brushless motor (60) is located in, and the initial electrical angle $\theta_k$ corresponding to the current sector, according to magnetic pole detection signals;
   obtaining an expected $\omega_k$ of the rotor (61) in the current sector by calculating the average speed of one or more sectors previous to the current sector;
   determining a real-time electrical angle $\theta$ of the rotor (61) in the current sector based on the expected $\omega_k$ and the initial electrical angle $\theta_k$;
   determining a modulation strategy for sinusoidal modulated output voltage;
   determining a real-time equivalent voltage according to the modulation strategy and obtaining a corresponding pulse modulation driving signal according to the determined the real-time equivalent voltage.

9. The motor driving method of claim 8, a process of the method returns to the step of identifying the current sector and the initial electrical angle $\theta_k$ corresponding to the current sector.

10. The motor driving method of claim 8 or 9, wherein determining the real-time electrical angle $\theta$ by the following formula: $0=\theta_k+\omega_k*(t-t_k)$.

11. The motor driving method of any of claims 8-10, further comprises starting the brushless motor (60) with a square wave driving mode before the step of identifying the current sector and the initial electrical angle $\theta_k$ corresponding to the current sector.

100

50

38    30

VCC

UH    VH    WH    60
U
W    V

calculation/control module

UL    VL    WL

H1    61    H3

36

rotor position
identifying module

H2

speed
calculation
module

sampling
filter module

34    32

Figure 1

Figure 2

S301 — Starting the brushless motor with a square wave driving mode

S302 — Identifying a current sector, and the initial electrical angle $\theta_k$ corresponding to the current sector k

S303 — Obtaining an expected $\omega_k$ of the rotor in the current sector

S304 — Determining a real-time electrical angle $\theta$ of the rotor in the current sector

S305 — Determining a modulation strategy for sinusoidal modulated output voltage

S306 — Determining the real-time equivalent voltage, and obtaining a corresponding pulse modulation driving signal accordingly

Figure 3

EP 3 557 754 A1

Europäisches Patentamt
European Patent Office
Office européen des brevets

# EUROPEAN SEARCH REPORT

Application Number

EP 19 16 8480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 320 187 A2 (DELPHI TECH INC [US]) 18 June 2003 (2003-06-18) | 1-6,8-11 | INV. H02P1/04 |
| Y | * paragraph [0011] - paragraph [0018]; claims 1-16; figures 1-4 * | 7 | H02P6/08 H02P6/10 |
| | ----- | | H02P6/16 |
| Y | US 2003/034748 A1 (WALTERS JAMES E [US] ET AL) 20 February 2003 (2003-02-20) | 7 | H02P6/17 H02P6/20 |
| A | * paragraph [0008] - paragraph [0009]; claims 1-16; figures 1-4 * * paragraph [0013] - paragraph [0017] * * paragraph [0020] - paragraph [0022] * | 1-6,8-11 | H02P6/21 |
| | ----- | | |
| A,P | CN 108 282 114 A (NANTONG JEFF ELECTRIC CO LTD) 13 July 2018 (2018-07-13) * page 1, line 32 - page 3, line 11; claims 1-10; figures 1-7 * * page 4, line 4 - page 6, line 46 * | 1-11 | |
| | ----- | | |

TECHNICAL FIELDS SEARCHED (IPC)

H02P

The present search report has been drawn up for all claims

| Place of search | Date of completion of the search | Examiner |
|---|---|---|
| Munich | 30 August 2019 | Roussel, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

## ANNEX TO THE EUROPEAN SEARCH REPORT
## ON EUROPEAN PATENT APPLICATION NO.

EP 19 16 8480

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2019

| Patent document cited in search report | | Publication date | Patent family member(s) | | Publication date |
|---|---|---|---|---|---|
| EP 1320187 | A2 | 18-06-2003 | EP 1320187 A2 | | 18-06-2003 |
| | | | US 2003102829 A1 | | 05-06-2003 |
| US 2003034748 | A1 | 20-02-2003 | NONE | | |
| CN 108282114 | A | 13-07-2018 | NONE | | |

EPO FORM P0459

For more details about this annex : see Official Journal of the European Patent Office, No. 12/82